# EUROPEAN PATENT SPECIFICATION

(11) **EP 0 357 295 B1**
(45) Date of publication and mention of the grant of the patent: **03.07.1996**
(21) Application number: 89308329.5
(22) Date of filing: 15.08.1989
(51) Int. Cl.: C10G 49/04

(54) **Catalysts for hydrotreating of hydrocarbons and methods of preparing the same**
Kohlenwasserstoffbehandlungskatalysatoren und Verfahren zu deren Herstellung
Catalyseurs d'hydrotraitement d'hydrocarbures et leurs méthodes de préparation

(30) Priority: 19.08.1988 JP 206194/88; 13.09.1988 JP 229246/88; 13.09.1988 JP 229247/88; 08.09.1988 JP 225099/88; 19.09.1988 JP 234000/88
(43) Date of publication of application: 07.03.1990
(73) Proprietor: SUMITOMO METAL MINING COMPANY LIMITED, Tokyo 105 (JP)
(72) Inventor: Takahashi, Yasuhito, Narashino City Chiba Prefecture (JP); Kawaguchi, Tomio, Funabashi City Chiba Prefecture (JP); Sakai, Shigeru, Ichikawa City Chiba Prefecture (JP)
(74) Representative: Wilson, Nicholas Martin

(56) References cited:
- EP-A- 0 289 211
- EP-A- 0 300 629
- US-A- 4 111 796

## Description

### FIELD OF THE INVENTION

The present invention relates to catalysts for hydrotreating hydrocarbons and methods of preparing the same.

### BACKGROUND OF THE INVENTION

In a so-called hydrotreatment of hydrocarbons where a hydrocarbon oil is hydrogenated, desulfurized, denitrogenated or decomposed in the presence of hydrogen, a catalyst composed of at least one metal selected from metals of Group VI of the Periodic Table and metals of Group VIII of the Periodic Table, as an active component, as carried on an inorganic oxide carrier such as alumina (Al₂O₃), silica-alumina (SiO₂-Al₂O₃), titania (TiO₂) or the like is employed. As the metal of Group VI, molybdenum (Mo) and tungusten (W) are well utilized for the purpose; and as the metal of Group VIII, cobalt (Co) and nickel (Ni) for the purpose.

Such metal is generally carried on the carrier in the form of an oxide thereof, which, however, is inactive as it is. Accordingly, the catalyst is required to be activated by presulfurization thereby to convert the metal oxide into the corresponding sulfide prior to being applied to hydrotreating reaction.

As a conventional means for such presulfurization which has hitherto been effected in general, a sulfurizing agent is introduced into the catalyst layer together with hydrogen, after the catalyst has been filled in a reactor where hydrotreating a hydrocarbon oil is to be effected. The operating condition for presulfurization varies in accordance with the hydrotreating process and with the sulfurizing agent used. For instance, where hydrogen sulfide is used as the sulfurizing agent, the compound is incorporated into hydrogen in an amount of from 0.5 to 5 % by volume or so, and the hydrogen sulfide-containing hydrogen is applied to the catalyst in an amount of from 1000 to 3000 liters per liter of the catalyst (as calculated under the condition of normal temperature and normal pressure) and the presulfurization is effected at 180°C or higher (generally 250°C or higher). Where carbon disulfide, normal-butyl mercaptan, dimethyl sulfide, demethyl disulfide or the like is used as the sulfurizing agent, the compound is diluted with a light hydrocarbon oil and is applied to the catalyst under the condition of a temperature of from 250°C to 350°C, a pressure of from 20 to 100 kg/cm², a liquid space velocity of from 0.5 to 2.0 hr⁻¹, and a hydrogen/oil ratio of from 200 to 1000 N-liter/liter.

After completion of such presulfurization, the reaction system is substituted by a raw material oil which is actually to be processed and the intended hydrotreatment is started with the thus activated catalyst. As the presulfurization has a significant influence on the success or not of the hydrotreatment to follow, pertinent selection of the materials to be employed in the process and careful operation of the process are required. Where a diluting agent is used, for instance, the agent must be a hydrocarbon oil free from olefins since olefins, if contained in the diluting agent, would form a polymer product and the product would poison the hydrotreating catalyst. The catalyst metal would be passivated, when reacted with hydrogen at a high temperature to be reduced. Accordingly, in order to prevent such passivation, it is necessary to use an excess amount of the sulfurizing agent, and the proportion of the sulfurizing agent and hydrogen must be maintained properly. Further, although such presulfurization is generally carried out for several days, it is not automated in most cases as the operation is a temporary one. In addition, the pre-sulfurization process requires some complicated treatment which is different from conventional one so that the labour load of the operators is extremely noticeable. Under the situation, omission of the pre-sulfurization step or at least reduction of the complicated operation of the step has been one problem in this technical field.

Recently, one method has been proposed, which could meet the request.

The method is directed to presulfurization of an active metal-carried catalyst by impregnating the said catalyst with a polysulfide of a general formula R-S(n)-R′, where n represents an integer of from 3 to 20, and R and R′ each represent a hydrogen atom or an organic group having from 1 to 150 carbon atoms per one molecule, and heat-treating the thus impregnated catalyst under the condition of a temperature of 65 to 275°C and a pressure of 0.5 to 70 bars and in the absence of hydrogen gas (Japanese Patent Application Laid-Open No. 61-111144).

In accordance with the method, the polysulfide as introduced into the catalyst sulfurizes the active metal by heat-treatment. Accordingly, where the above-mentioned presulfurization is carried out in a reactor, neither sulfurizing agent nor diluting agent is necessary and the operation is easy. In addition, the above-mentioned pre-sulfurization may also be effected even outside the reactor. In such case, the presulfurized catalyst may be applied to the reactor whereupon the intended hydrotreatment may immediately be started thereafter.

However, the amount of the polysulfide to be used in the said method is a stoichiometrical amount necessary for sulfurizing the whole active metal oxide (for example, CoO, MnO₃) in the catalyst by the successive heat-treatment thereof, and the polysulfide is diluted in a pertinent organic solvent and then applied to the catalyst for impregnation. Since the said polysulfide is highly viscous, the viscosity would still be high even though it is diluted with an organic solvent and, as a result, there would be a problem that the polysulphide would hardly be penetrated into the inside of fine pores of the catalyst.

The catalyst to be treated by presulphurization is prepared by a method where an aluminium hydrate obtained from a starting material of sodium aluminate is shaped, dried and fired to give a γ-alumina, and the resulting γ-alumina is impregnated with an aqueous solution of a water-soluble compound of an active metal and then dried and heat-treated so that the active metal is converted into the corresponding oxide form, or by a method where an aluminium hydrate is blended with an aqueous solution of a water-soluble compound of an active metal and then shaped, dried and fired so that the active metal is carried on a carrier composed of the resulting γ-alumina in the form of the oxide form of the active metal.

EP 0300629 discloses a catalyst for the hydrotreatment of a hydrocarbon oil comprising an inorganic oxide carrier and an active component supported on the carrier and formed of at least one member selected from the group consisting of water-soluble compounds of molybdenum, tungsten, and the metal of Group 8 in the Periodic Table of Elements and at least one mercapto (-SH) group-containing organic compound selected from the group consisting a mercaptocarboxylic acids represented by the general formula:

HS-(CH₂)ₙ-COOR

(wherein n stands for an integer in the range of 1 to 3 and R for a hydrogen atom, an alkali metal, an alkaline earth metal, annomium, or a linear or branched naphtheric alkyl group having 1 to 10 carbon atoms), amino-substituted mercaptans represented by the general formula:

H₂N-R'-SH

(wherein R' stands for a divalent hydrocarbon group), divalent mercaptans represented by the general formula:

HS-R'-SH

(wherein R' stands for a divalent hydrocarbon group), and thio acids represented by the general formula:

R"-COSH

(wherein R" stands for a monovalent hydrocarbon group).

### SUMMARY OF THE INVENTION

The object of the present invention is to provide catalysts for hydrotreating of hydrocarbons, which can be prepared more simply and more inexpensive than the above-mentioned conventional methods, which can be employed in hydrotreatment without pre-sulphurization and which can directly be applied to hydrotreatment without heat treatment, as well as to provide methods for preparing such catalysts.

The present inventors earnestly studied so as to overcome the above-mentioned problems and to achieve the above-mentioned object and, as a result, have found that the object may be attained by employing a water-soluble compound of a metal of Group VI and Group VIII of the Periodic Table as the active ingredient together with employment of an organic compound having one or two sulfurs in place of polysulfides and further employing phosphoric acid, and have hereby achieved the present invention.

Specifically, the subject matter of the present invention is to provide a catalyst for hydrotreating of hydrocarbons, which comprises a body formed by shaping a mixture composed of a carrier substance consisting of an oxide of aluminium and/or an oxide hydrate of aluminium, at least one water-soluble compound of a metal of Group VI and/or Group VIII of the Periodic Table, phosphoric acid and at least one organic compound selected from the group consisting of mercapto-carboxylic acids of a general formula:

HS-(CH₂)ₙ-COOR

where n represents an integer of from 1 to 3; and R represents a hydrogen atom, or an alkali metal, an alkaline earth metal, an ammonium group, or an alkyl group having from 1 to 10 carbon atoms,
thio-acids of a general formula:

R'-COSH

where R' represents a monovalent hydrocarbon group having from 1 to 15 carbon atoms,
amino-substituted mercaptans of a general formula:

H₂N-R"-SH

where R" represents a divalent hydrocarbon group having from 1 to 15 carbon atoms,
dimercaptans of a general formula:

HS-R"-SH

where R" represents a divalent hydrocarbon group having from 1 to 15 carbon atoms, and
mercapto-alcohols of a general formula:

RaS-R'''-(OH)ₙ

where R"' represents a hydrocarbon group having from 1 to 15 carbon atoms; Ra represents a hydrogen atom or an alkyl group having from 1 to 2 carbon atoms; and n represents an integer of from 1 to 2.

In accordance with the first embodiment of the present invention, the catalyst of the present invention is prepared by a method where a carrier substance consisting of an oxide of aluminium and/or an oxide hydrate of aluminium is blended and kneaded with a solution containing at least one water-soluble compound of a metal of Group VI and/or Group VIII of the Periodic Table, phosphoric acid and at least one organic compound selected from the group consisting of mercapto-carboxylic acids of a general formula:

HS-(CH₂)ₙ-COOR,

thio-acids of a general formula:

R'-COSH,

amino-substituted mercaptans of a general formula:

H₂N-R"-SH,

dimercaptans of a general formula:

HS-R"-SH,

and mercapto-alcohols of a general formula:

RaS-R'''-(OH)ₙ,

and the resulting blend is shaped and dried to prepare the said catalyst. (In the said formulae, n, R, R', R" and R"' have the same meanings as mentioned above, and the same shall apply hereunder.)
As the carrier substance for use in the present invention, which consists essentially of an oxide of aluminium and/or an oxide hydrate of aluminium, a γ-alumina or boehmite obtainable by heat-treating a hydrate of aluminium is employed. Boehmite has a structural formula of A10(OH) (or a chemical formula of Al₂O₃.H₂O as monohydrate of alumina), which is an aluminium oxide hydrate. Sodium aluminate is hydrolyzed to give a gel substance, and this is dehydrated by filter- pressing to prepare a dehydrated boehmite gel (hereinafter referred to as "dehydrated boehmite"); or a dehydrated boehmite is spray-dried (hereinafter referred to as "spray-dried boehmite"). These dehydrated boehmite and spray-dried boehmite can be employed in the present invention. Boehmite is also prepared as a natural boehmite ore, which contains impurities of SiO₂, FeO₂, Fe₂O₃, MgO, CaO, etc. When heated, boehmite is dehydrated to γ-alumina, to γ-alumina and to θ-alumina in order, and this finally becomes α-alumina (corundum) at 1100 to 1200°C. Accordingly, as boehmite is an intermediate between aluminium hydroxide and aluminium oxide, it may be employed singly or may also be employed in combination with an active γ-alumina. Alternatively, only γ-alumina may also be employed as the carrier substance.

As the water-soluble compounds of metals of Group VI of the Periodic Table for use in the present invention, molybdenum (Mo) and tungsten (W) which are generally employed as active metals of catalysts are preferably employed as ammonium molybdate and ammonium tungstate respectively. Where molybdenum trioxide and tungsten trioxide are employed, ammonia gas is applied thereto and they are used in the form of ammonium molybdate and ammonium tungstate. As the water-soluble compounds of metals of Group VIII of the Periodic Table for use in the present invention, cobalt, (Co) and nickel (Ni) which are generally employed as active metals of catalysts are preferably employed as cobalt nitrate, cobalt carbonate, nickel nitrate and nickel carbonate. They are used singly or in combination, in the form of an aqueous solution. Where the water-soluble compounds of the said active metals are heated together with at least one of mercapto-carboxylic acids of a general formula HS-(CH₂)ₙ-COOR, thio-acids of a general formula R'-COSH, amino-substituted mercaptans of a general formula H₂N-R'-SH, dimercaptans of a general formula HS-R"-SH and mercapto-alcohols of a general formula RaS-R'''-(OH)ₙ (hereinafter referred to "mercapto-carboxylic acids and other sulfurizing agents"), they form sulfides such as MoS₂, WS₂, CoS, NiS and the like which are highly active in hydrogenation reaction.

In the mercapto-carboxylic acids and other sulfurizing agents for use in the present invention, the portion which is functional to sulfurization of active metals comprises one or two sulfur components in the molecule of the respective sulfurizing agent compounds. Accordingly, where the number of the carbon atoms in the hydrocarbon group in the molecule of the said sulfurizing agent compound is large, the portion which is functional as the sulfurizing agent in the molecule would thereby be relatively small and, as a result, not only the compound is uneconomical but also the compound would unfavirably bring superfluous carbons and hydrogens into the catalyst. Because of such reason, the sulfurizing compounds to be employed in the present invention are preferred to have carbon atoms as few as possible. Specifically, the number of the carbon atoms in the compounds is preferably at most up to 15. More precisely, as the mercapto-carboxylic acids of a general formula HS-(CH₂)ₙ-COOR (where n represents an integer of from 1 to 3; and R represents a hydrogen atom, or an alkali metal, an alkaline earth metal, an ammonium group, or an alkyl group having from 1 to 10 carbon atoms), for example, mercapto-acetic acid (HSCH₂COOH), β-mercaptopropionic acid (HSCH₂CH₂COOH) or the like mercapto-carboxylic acids as well as alkali metal salts, alkaline earth metal salts and ammonium salts thereof can be employed. In particular, metal ion-free acid type and ammonium salt type compounds which do not form any substance to be a catalyst poison to hydrogenation reaction are preferred. These can be used also together with phosphoric acid in the form of a phosphoric acid-containing acidic aqueous solution. In addition, there are also mentioned mercapto-carboxylic acid esters such as methyl mercapto-acetate (HSCH₂COOCH₃), ethyl 2-mercapto-acetate (HSCH₂COOC₂H₅), 2-ethylhexyl mercapto-acetate (HSCH₂COOC₈H₁₇) or methyl 3-mercapto-propionate (HSCH₂CH₂COOCH₃). As the thio-acids of a general formula R'-COSH (where R' represents a hydrocarbon group having from 1 to 15 carbon atoms), there are mentioned, for example, thio-acetic acid (CH₃COSH) and thio-benzoic acid (C₆H₅COSH). As the amino-substituted mercaptans of a general formula H₂N-R"-SH (where R" represents a divalent hydrocarbon group), for example, there are mentioned 2-aminoethane-thiol (H₂NCH₂CH₂SH) and 4-aminothiophenol (H₂NC₆H₄SH). As the dimercaptans of a general formula HS-R"-SH (where R" represents a divalent hydrocarbon group having from 1 to 15 carbon atoms, for example, there are mentioned ethanedithiol (HSCH₂CH₂SH) and 1,4-butanedithiol (HS(CH₂)₄ SH). AS the mercapto-alcohols of a general fromula RaS-R'''-(OH)ₙ (where R"' represents an alkyl group having from 1 to 15 carbon atoms or a phenyl group; Ra represents a hydrogen atom or an alkyl group having from 1 to 2 carbon atoms; and n represents an integer of from 1 to 2), for example, there are mentioned 2-mercaptoethanol (HSCH₂CH₂OH), 2-(methylthio)ethanol (CH₃SCH₂CH₂OH), 2-(ethylthio)ethanol (C₂H₅SCH₂CH₂OH), 3-mercapto-2-butanol (CH₃CH(SH)CH(OH)CH₃), 4-mercaptophenol (HSC₆H₄OH), 2-(methylhtio)phenol (CH₃SC₆H₄OH), 4-(methylthio)-phenol (CH₃SC₆H₄OH), 2-(ethylthio)phenol (C₂H₅SC₆H₄OH), 3-mercapto-1,2-propanediol (HSCH₂CH₂(OH)CH₂OH), 3-methylthio-1,2-propanediol (CH₃SCH₂CH₂(OH)CH₂OH) and 3-ethylthio-1,2-propanediol (C₂H₅SCH(OH)CH₂OH). The said examples of the compounds are preferably employed in the present invention but do not whatsoever restrict the scope of the present invention.

Regarding the content of the metals of Group VI and Group VIII of the Periodic Table in the catalyst as the active metal component therein, where the catalyst contains only one kind of the said active metals, the content of the metal in the catalyst is preferred to fall-within the scope of from 1 to 30 % by weight as the oxide of the active metal. On the other hand, where the catalyst contains both the metal of Group VI and the metal of Group VIII in combination, it is preferred that the content of the metal of Group VI is from 5 to 30 % by weight and that of the metla of Group VIII is from 1 to 8 % by weight, both as the oxides of the said metals.

The amount of the mercapto-carobxylic acids and other sulfurizing agents to be used in accordance with the present invention is preferably from 1 to 3 equivalents to the sulfur amount necessary for forming sulfides, which are highly active in hydrogenation reaction, such as MoS₂, WS₂, CoS or NiS, from the metals of Group VI and Group VIII of the Periodic Table. If the amount is less than one equivalent, the activity could not be attained sufficiently. On the other hand, if it is more than three equivalents, the activity would be no more augmented. Accordingly, the amount falling within the said range is proper.

Phosphoric acid may be incorporated into the catalyst in an amount of about 3 % by weight or so as P₂O₅.

The catalyst of the present invention can be prepared from the above-mentioned raw materials in the proportion as mentioned above, in accordance with the method mentioned below. As the method, the carrier substance, the active metal, phosphoric acid and the sulfurizing agent are kneaded, shaped and dried.

As the solvent for dissolving the water-soluble compounds and sulfides of the active metals, water is most economically employed.

The drying temperature in the said method preferably falls within the scope of from 50 to 200°C; and the drying time therein preferably falls within the scope of from 2 to 20 hours.

For practical use of the catalysts as prepared by the methods of the present invention, the freshly dried catalyst may be filled in a reactor column and can be utilized for hydrotreating a hydrocarbon oil in the column. The water content in the catalyst as introduced thereinto in the course of the step of preparing the catalyst may be dried and removed therefrom after the catalyst has been put in the reactor column.

Since the catalyst of the present invention contains the mercapto-carboxylic acid and other sulfurizing agent in the form as carried on the carrier substance together with the water-soluble compound of the active metal, the active metal can be converted into the sulfide thereof in the course of the step of elevating the temperature of the reaction system up to the reaction temperature for dehydration and desulfurization of the hydrocarbon oil to be processed with the catalyst and, as a result, the catalyst can directly be utilized in the hydrodesulfurization for the hydrocarbon oil without presulfurization of the catalyst.

In addition, the catalystsof the present invention have a higher activity than the conventional catalysts which require presulfurization. Although not clarified as yet, the reason is considered that the mercapto-carboxylic acids and other sulfurizing agents would form a soluble coordination compound (metal mercaptide) together with the water-soluble compounds of the active metals and the resulting soluble coordinate compound would be carried on the carrier substance in a highly dispersed form.

The following examples are intended to illustrate the present invention in more detail but not to limit it in any way.

In the following examples, all the catalysts were shaped by extrusion mouling into a cylindrical shape having a diameter of 1.6 mm and a length of from 3 to 5 mm.

The catalyst activity was evaluated on the basis of hydrodesulfurization of Kuwait straight-run light gas oil (KSRLGO).

The KSRLGO used in the reaction had the following property.

| | |
|---|---|
| Specific Gravity (15/4°C) | 0.844 |
| Sulfur Content (% by weight) | 1.13 |
| Nitrogen Content (ppm by weight) | 162 |
| Distillation Characteristic: | |
| Initial Boiling point (°C) | 203.3 |
| 50 vol.% Point (°C) | 299.0 |
| End Point (°C) | 391.8 |

The reaction was effected by the use of a flow method reaction device, under the following reaction conditions.

| | |
|---|---|
| Amount of Catalyst | 3 ml |
| Liquid Hourly Space Velocity of Raw Material Oil | 2.0 hr⁻¹ |
| Reaction Pressure (hydrogen pressure) | 30 kg/cm² |
| Reaction Temperature | 330°C |
| Hydrogen/Oil Ratio | 300 N-liter/liter |
| Oil-Introducing Time | 8 hr |

The oil being processed was sampled every two hours, and the sulfur content in the oil and the desulfurization percentage were obtained. The desulfurization percentage as mentioned in the following examples indicates an average of the values of the desulfurization percentage as obtained from the sulfur content in the processed oil as sampled four hours, six hours and eight hours after the start of the reaction.

### EXAMPLES 1, 2 and 3

72.7 g of mercapto-acetic acid was added to 300 ml of a solution prepared from 38.5 g of molybdenum trioxide, 16.4 g of cobalt carbonate (Co content: 49.1 wt.%), 12.5 g of 85 wt.% phosphoric acid and water to obtain a phosphoric acid-containing metal mercaptide solution (pH 0.6).

The metal mercaptide solution and 673 g of dehydrated boehmite (Al₂O₃: 29.7 wt.%) were put in a heating kneader and kneaded with heating at 95°C so as to evaporate the excess water, to obtain a blend, which was then shaped.

The shaped body was dried at 100°C for 16 hours to obtain a catalyst (Catalyst-5).

Catalyst-6 and Catalyst-7 were prepared in the same manner as above, except that mercapto-acetic acid was used in an amount of 109.1 g and 145.5 g, respectively.

The breaking strength of the Catalysts 5, 6 and 7 was 1.5 kg/mm or more.

Regarding the active metal content in the Catalysts 5, 6 and 7, molybdenum content was 15 % by weight as MoO₃, cobalt content was 4 % by weight as CoO and phosphorus content is 3 % by weight as P₂O₅. The amount of mercapto-acetic acid used was 1.0 time, 1.5 times and 2.0 times, respectively, of the theoretical amount of sulfur necessary to convert Mo and Co into MoS₂ and CoS, respectively.

The desulfurization percentage with each of the Catalysts 5, 6 and 7 was 82,5 %, 83.5 % and 82.0 %, respectively.

### EXAMPLE 4:

109.1 g of mercapto-acetic acid was added to 300ml of a solution prepared from 38.5 g of molybdenum trioxide, 16.4 g of cobalt carbonate (Co content: 49.1 wt.%), 12.5 g of 85 wt.% phosphoric acid and water, to obtain a phosphoric acid-containing metal mercaptide solution (pH 0.6).

The metal mercaptide solution and 272 g of spray-dried boehmite powder (Al₂O₃ : 73.5 wt.%) were put in a kneader and keaded to obtain a blend, which was then shaped.

The shaped body was dried at 100°C for 16 hours to prepare a catalyst (Catalyst-8).

The breaking strength of the Catalyst-8 was 1.5 kg/mm or more.

Regarding the active metal content in the Catalyst-8, molybdenum content was 15 % by weight as MoO₃, cobalt content was 4 % by weight as CoO and phosphorus content was 3 % by weight as P₂O₅. The amount of mercapto-acetic acid used was 1.5 times of the theoretical amount of sulfur necessary to convert Mo and Co into MoS₂ and CoS, respectively.

The desulfurization percentage with the Catalyst-8 was 8.18 %.

### EXAMPLE 5:

109.1 g of mercapto-acetic acid was added to 300 ml of a solution prepared from 38.5 g of molybdenum trioxide, 16.4 g of cobalt carbonate (Co content: 49.1 wt.%), 12.5 g of 85 wt.% phosphoric acid and water, to obtain a phosphoric acid-containing metal mercaptide solution (pH 0.6).

The metal mercaptide solution and 200 g of γ-alumina powder were put in a kneader and kneaded to obtain a blend comprising the said γ-alumina and metal mercaptide. This was thereafter shaped.

The shaped body was dried at 100°C for 16 hours to prepare a catalyst (Catalyst-9).

The breaking strength of the Catalyst-9 was 1.5 kg/mm or more.

Regarding the active metal content in the Catalyst-9, molybdenum content was 15 % by weight as MoO₃, cobalt content was 4 % by weight as CoO and phosphorus content was 3 % by weight as P₂O₅. The amount of mercapto-acetic acid used was 1.5 times of the theoretical amount of sulfur necessary to convert Mo and Co into MoS₂ and CoS, respectively.

The desulfurization percentage with the Catalyst-9 was 81.5 %.

### EXAMPLE 6 :

106.8 g of mercapto-propionic acid was added to 300 ml of a solution prepared from 38.5 g of molybdenum trioxide, 16.4 g of cobalt carbonate (Co content: 49.1 wt.%), 12.5 g of 85 wt.% phosphoric acid and water, to obtain a phosphoric acid-containing metal mercaptide solution (pH 0.7).

The metal mercaptide solution and 673 g of the same dehydrated boehmite as that used in Examples 1, 2 and 3 were put in a heating kneader and kneaded with heating at 95°C so as to evaporate the excess water therefrom, to obtain a blend, which was then shaped.

The shaped body was dried at 100°C for 16 hours to prepare a catalyst (Catalyst-10).

The breaking strength of the Catalyst-10 was 1.5 kg/mm or more.

Regarding the active metal content in the Catalyst-10, molybdenum content was 15 % by weight as MoO₃, cobalt content was 4 % by weight as CoO and phosphorus content was 3 % by weight as P₂O₅. The amount of mercapto-propionic acid used was 1.5 times of the theoretical amount of sulfur necessary to convert Mo and Co into MoS₂ and CoS, respectively.

The desulfurization percentage with the Catalyst-10 was 86.0 %.

### EXAMPLE 7:

219.6 g of 50 wt.% ammonium thioglycolate solution was added to 300 ml of a solution prepared from 38.5 g of molybdenum trioxide, 16.4 g of cobalt carbonate (Co content: 49.1 wt.%), 12.5 g of 85 wt.% phosphoric acid and water, to obtain a phosphoric acid-containing metal mercaptide solution (pH 5.2).

The metal mercaptide solution and 673 g of the same dehydrated boehmite as that used in Examples 1, 2 and 3 were put in a heating kneader and kneaded with heating at 95°C so as to evaporate the excess water therefrom, to obtain a blend, which was then shaped.

The shaped body was dried at 100°C for 16 hours to prepare a catalyst (Catalyst-11).

The breaking strength of the Catalyst-11 was 1.5 kg/mm or more.

Regarding the active metal content in the Catalyst-11, molybdenum content was 15 % by weight as MoO₃, cobalt content was 4 % by weight as CoO and phosphorus content was 3 % by weight as P₂O₅. The amount of ammonium thioglycoate sued was 1.5 times of the theoretical amount of sulfur necessary to convert Mo and Co into MoS₂ and CoS, respectively.

The desulfurization percentage with the Catalyst-11 was 83.4 %.

### EXAMPLE 8:

154.8 g of mercapto-acetic acid was added to 300 ml of a solution prepared from 57.6 g of molybdenum trioxide, 20.9 g of nickel carbonate (Ni content: 43.3 wt.%), 30.4 g of 85 wt.% phosphoric acid and water, to obtain a phosphoric acid-containing metal mercaptide solution (pH 0.2).

The metal mercaptide solution and 272 g of spray-dried boehmite powder (Al₂O₃ : 73.5 wt.%) were put in a kneader and keanded to obtain a blend, which was then shaped.

The shaped body was dried at 100°C for 16 hours to prepare a catalyst (Catalyst-12).

The breaking strength of the Catalyst-12 was 1.5 kg/mm or more.

Regarding the active metal content of the Catalyst-12, molybdenum content was 15 % by weight as MoO₃, nickel content was 4 % by weight as NiO and phosphorus content was 6.5 % by weight as P₂O₅. The amount of mercapto-acetic acid used was 1.5 times of the theoretical amount of sulfur necessary to convert Mo and Ni into MoS₂ and NiS, respectively.

The desulfurization percentage with the catalyst was 84.2 %.

### EXAMPLE 9:

Catalyst-23 was obtained in the same manner as Example 1, except that 106.8 g of methyl mercapto-acetate was used as the sulfurizing agent.

The breaking strength of the Catalyst-23 was 1.5 kg/mm or more.

Regarding the active metal content in the Catalyst-23, molybdenum content was 15 % by weight as MoO₃, cobalt content was 4 % by weight as CoO and phosphorus content was 3 % by weight as P₂O₅. The amount of methyl mercapto-acetate used was 1.5 times of the theoretical amount of sulfur necessary to convert Mo and Co into MOS₂ and CoS, respectively.

The desulfurization percentage with the Catalyst-23 was 82.2 %.

### EXAMPLE 10:

Catalyst-24 was obtained in the same manner as Example 4, except that 106.8 g of methyl mercapto-acetate was used as the sulfurizing agent.

The breaking strength of the Catalyst-24 was 1.5 kg/mm or more.

Regarding the active metal content in the Catalyst-24, molybdenum content was 15 % by weight as MoO₃, cobalt content was 4 % by weight as CoO and phosphorus content was 3 % by weight as P₂O₅. The amount of methyl mercapto-acetate used was 1.5 times of the theoretical amount of sulfur necessary to convert Mo anc Co into MoS₂ and CoS, respectively.

The desulfurization percentage with the Catalyst-24 was 83.0 %.

### EXAMPLE 11:

Catalyst-25 was prepared in the same manner as Example 5, except that 120.9 g of methyl 3-mercapto-propionate was used as the sulfurizing agent.

The breaking strength of the Catalyst-25 was 1.5 kg/mm or more.

Regarding the active metal content in the Catalyst-25, molybdenum content was 15 % by weight as MoO₃, cobalt content was 4 % by weight as CoO and phosphorus content was 3 % by weight as P₂O₅. The amount of methyl 3-mercapto-propionate used as 1.5 times of the theoretical amount of sulfur necessary to convert Mo and Co into MoS₂ and CoS, respectively.

The desulfurization percentage with the Catalyst-25 was 82.0 %.

### EXAMPLE 12:

Catalyst-26 was prepared in the same manner as Example 1, except that 120.9 g of methyl 3-mercapto-propionate was used as the sulfurizing agent.

The breaking strength of the Catalyst-26 was 1.5 kg/mm or more.

Regarding the active metal content in the Catalyst-26, molybdenum content was 15 % by weight as MoO₃, cobalt content was 4 % by weight as CoO and phosphorus content was 3 % by weight as P₂O₅. The amount of mehtyl 3-mercapto-propionate used as 1.5 times of the theoretical amount of sulfur necessary to convert Mo and Co into MoS₂ and CoS, respectively.

The desulfurization percentage with the Catalyst-26 was 81.1 %.

### EXAMPLE 13:

Catalyst-27 was prepared in the same manner as Example 4, except that 120.9 g of methyl 3-mercapto-propionate was used as the sulfurizing agent.

The breaking strength of the Catalyst-27 was 1.5 kg/mm or more.

Regarding the active metal content in the Catalyst-27, molybdenum content was 15 % by weight as MoO₂, cobalt content was 4 % by weight as CoO and phosphorus content was 3 % by weight as P₂O₅. The amount of methyl 3-mercaptopropionate used as 1.5 times of the theoretical amount of sulfur necessary to convert Mo and Co into MoS₂ and CoS, respectively.

The desulfurization percentage with the Catalyst-27 was 81.5 %.

### EXAMPLE 14:

Catalyst-28 was prepared in the same manner as Example 12, except that 151.6 g of methyl mercapto-acetate was used as the sulfurizing agent.

The breaking strength of the Catalyst-28 was 1.5 kg/mm or more.

Regarding the active metal content in the Catalyst-28, molybdenum content was 20 % by weight as MoO₃, nickel content was 4 % by weight as NiO and phosphorus content was 6.5 % by weight as P₂O₅. The amount of methyl mercapto-acetate used was 1.5 times of the theoretical amount of sulfur necessary to convert Mo and Ni into MoS₂ and NiS, respectively.

The desulfurization percentage with the Catalyst-28 was 79.0 %.

### EXAMPLE 15:

Catalyst-39 was prepared in the same manner as Example 1, except that 78.2 g of thioacetic acid was used as the sulfurizing agent.

The breaking strength of the Catalyst-39 was 1.5 kg/mm or more.

Regarding the active metal content in the Catalyst-39, molybdenum content was 15 % by weight as MoO₃, cobalt content was 4 % by weight as CoO and phosphorus content was 3 % by weight as P₂O₅. The amount of thioacetic acid used was 1.5 times of the theoretical amount of sulfur necessary to convert Mo and Co into MoS₂ and CoS, respectively.

The desulfurization percentage with the Catalyst-39 was 83.0 %.

### EXAMPLE 16:

Catalyst-40 was prepared in the same manner as Example 4, except that 78.2 g of thioacetic acid was used as the sulfurizing agent.

The breaking stregnth of the Catalyst-40 was 1.5 kg/mm or more.

Regarding the active metal content in the Catalyst-40, molybdenum content was 15 % by weight as MoO₃, cobalt content was 4 % by weight as CoO and phosphorus content was 3 % by weight as P₂O₅. The amount of thioacetic acid used was 1.5 times of the theoretical amount of sulfur necessary to convert Mo and Co into MoS₂ and CoS, respectively.

The desulfurization percentage with the Catalyst-40 was 83.6 %.

### EXAMPLE 17:

Catalyst-41 was prepared in the same manner as Example 5, except that 139.0 g of thiobenzoic acid was used as the sulfurizing agent.

The breaking strength of the Catalyst-41 was 1.5 kg/mm or more.

Regarding the active metal content in the Catalyst-41, molybdenum content was 15 % by weight as MoO₃, cobalt content was 4 % by weight as CoO and phosphorus content was 3 % by weight as P₂O₅. The amount of thiobenzoic acid used was 1.5 times of the theoretical amount of sulfur necessary to convert Mo and Co into MoS₂ and CoO, respectively.

The desulfurization percentage with the Catalyst-41 was 85.8 %.

### EXAMPLE 18:

Catalyst-42 was prepared in the same manner as Example 1, except that 139.0 g of thiobenzoic acid was used as the sulfurizing agent.

The breaking stregnth of the Catalyst-4-2 was 1.5 kg/mm or more.

Regarding the active metal content in the Catalyst-42, molybdenum content was 15 % by weight as MoO₃, cobalt content was 4 % by weight as CoO and phosphorus content was 3 % by weight as P₂O₅. The amount of thiobenzoic acid used was 1.5 times of the theoretical amount of sulfur necessary to convert Mo and Co into MoS₂ and CoS, respectively.

The desulfurization percentage with the Catalyst-42 was 83.8 %.

### EXAMPLE 19:

Catalyst-43 was prepared in the same manner as Example 4, except taht 139.0 g of thiobenzoic acid was used as the sulfurizing agent.

The breaking strength of the Catalyst-43 was 1.5 kg/mm or more.

Regarding the active metal content in the Catalsyt-43, molybdenum content was 15 % by weight as MoO₃, cobalt content was 4 % by weight as CoO and phosphorus content was 3 % by weight as P₂O₅. The amount of thiobenzoic acid used was 1.5 times of the theoretical amount of sulfur necessary to convert Mo and Co into MoS₂ and CoS, respectively.

The desulfurization percentage with the Catalyst-43 was 84.2 %.

### EXAMPLE 20:

Catalyst-44 was prepared in the same manner as Example 9, except that 110.9 g of thioacetic acid was used as the sulfurizing agent.

The breaking strength of the Catalyst-44 was 1.5 kg/mm or more.

Regarding the active metal content in the Catalyst-44, molybdenum content was 20 % by weight as MoO₃, nickel content was 4 % by weight as NiO and phosphorus conttent was 6.5 % by weight as P₂O₅. The amount of thioacetic acid used was 1.5 times of the theoretical amount of sulfur necessary to convert Mo and Ni into MoS₂ and NiS, respectively.

The desulfurization percentage with the Catalyst-44 was 80.5 %.

### EXAMPLE 21:

Catalyst-55 was prepared in the same manner as Example 1, except that 77.6 g of 2-aminoethanethiol was used as the sulfurizing agent.

The breaking strength of the Catalyst-55 was 1.5 kg/mm or more.

Regarding the active metal content in the Catalyst-55, molybdenum content was 15 % by weight as MoO₃, cobalt content was 4 % by weight and phosphorus content was 3 % by weight as P₂O₅. The amount of 2-aminoethanethiol used was 1.5 times of the theoretical amount of sulfur necessary to convert Mo and Co into MoS₂ and CoS, respectively.

The desulfurization percentage with the Catalyst-55 was 81.8 %.

### EXAMPLE 22:

Catalyst-56 was prepared in the same manner as Example 4, except that 77.6 g of 2-aminoethanethiol was used as the sulfurizing agent.

The breaking strength of the Catalyst-56 was 1.5 kg/mm or more.

Regarding the active metal content in the Catalyst-56, molybdenum content was 15 % by weight as MoO₂, cobalt content was 4 % by weight as CoO and phosphorus content was 3 % by weight as P₂O₅. The amount of 2-aminoethanethiol used was 1.5 times of sulfur necessary to convert Mo and Co into MoS₂ and CoS, respectively.

The desulfurization percentage with the Catalyst-56 was 82.5 %.

### EXAMPLE 23:

Catalyst-57 was prepared in the same manner as Example 5, except that 125.9 g of 4-aminothiophenol was used as the sulfurizing agent.

The breaking strength of the Catalyst-57 was 1.5 kg/mm or more.

Regarding the active metal content in the Catalyst-57, molybdenum content was 15 % by weight as MoO₃, cobalt content was 4 % by weight as CoO and phosphorus content was 3 % by weight as P₂O₅. The amount of 4-aminothiophenol used was 1.5 times of the theoretical amount of sulfur necessary to convert Mo and Co into MoS₂ and CoS, respectively.

The desulfurization percentage with the Catalyst-57 was 83.8 %.

### EXAMPLE 24:

Catalyst-58 was prepared in the same manner as Example 1, except that 125.9 g of 4-aminothiophenol was used as the sulfurizing agent.

The breaking strength of the Catalyst-58 was 1.5 kg/mm or more.

Regarding the active metal content in the Catalyst-58, molybdenum content was 15 % by weight as MoO₃, cobalt content was 4 % by weight as CoO and phosphorus content was 3 % by weight as P₂O₅. The amount of 4-aminothiophenol used was 1.5 times of the theoretical amount of sulfur necessry to convert Mo and Co into MoS₂ and CoS, respectively.

The desulfurization percentage with the Catalyst-58 was 82.6 %.

### EXAMPLE 25:

Catalyst-59 was prepared in the same manner as Example 4, except that 125.9 g of 4-aminothiophenol was-used as the sulfurizing agent.

The breaking strength of the Catalyst-59 was 1.5 kg/mm or more.

Regarding the active metal content in the Catalyst-59, molybdenum content was 15 % by weight as MoO₃, cobalt content was 4 % by weight as CoO and phosphorus content was 3 % by weight as P₂O₅. The amount of 4-aminothiophenol used was 1.5 times of the theoretical amount of sulfur necessary to convert Mo and Co into MoS₂ and CoS.

The desulfurization percentage with the Catalyst-59 was 83.5 %.

### EXAMPLE 26:

Catalyst-60 was prepared in the same manner as Example 8, except that 110.1 g of 2-aminoethanethiol was used as the sulfurizing agent.

The breaking strength of the Catalyst-60 was 1.5 kg/mm or more.

Regarding the active metal content in the Catalyst-60, molybdenum content was 20 % by weight as MoO₃, nickel content was 4 % by weight as NiO and phosphorus content was 6.5 % by weight as P₂O₅. The amount of 2-aminoethanethiol used was 1.5 times of the theoretical amount of sulfur necessary to convert Mo and Ni to MoS₂ and NiS, respectively.

The desulfurization percentage with the Catalyst-60 was 77.8 %.

### EXAMPLE 27:

Catalyst-75 was prepared in the same manner as Example 7, except that 47.3 g of ethanedithiol was used as the sulfurizing agent.

The breaking strength of the Catalyst-75 was 1.5 kg/mm or more.

Regarding the active metal content in the Catalyst-75, molybdenum content was 15 % by weight as MoO₃, cobalt content was 4 % by weight as CoO and phosphorus content was 3 % by weight as P₂O₅. The amount of ethanedithiol used was 1.5 times of the theoretical amount of sulfur necessary to convert Mo and Co into MoS₂ and CoS, respectively.

The desulfurization percentage with the Catalyst-75 was 87.0 %.

### EXAMPLE 28:

Catalyst-76 was prepared in the same manner as Example 4, except that 61.4 g of 1,4-butanedithiol was used as the sulfurizing agent.

The breaking strength of the Catalyst-76 was 1.5 kg/mm or more.

Regarding the active metal content in the Catalyst-76, molybdenum content was 15 % by weight as MoO₃, cobalt content was 4 % by weight and phosphorus content was 3 % by weight as P₂O₅. The amount of 1,4-butanedithiol used was 1.5 times of the theoretical amount of sulfur necessary to convert Mo and Co into MoS₂ and CoS, resepctively.

The desulfurization percentage with the Catalyst-76 was 86.3 %.

### EXAMPLE 29:

Catalyst-77 was prepared in the same manner as Example 5, except taht 78.6 g of 2-mercaptoethanol was used as the sulfurizing agent.

The breaking strength of the Catalyst-77 was 1.5 kg/mm or more.

Regarding the active metal content in the Catalyst-77, molybdenum content was 15 % by weight as MoO₃, cobalt content was 4 % by weight as CoO and phosphorus content was 3 % by weight as P₂O₅. The amount of 2-mercaptoethanol used was 1.5 times of the theoretical amount of sulfur necessary to convert Mo and Co into MoS₂ and CoS, respectively.

The desulfurization percetage with the Catalyst-77 was 88.0 %.

### EXAMPLE 30:

Catalyst-78 was prepared in the same manner as Example 1, except that 126.9 g of 4-mercaptophenol was used as the sulfurizing agent.

The breaking strength of the Catalyst-78 was 1.5 kg/mm or more.

Regarding the active metal content in the Catalyst-78, molybdenum content was 15 % by weight as MoO₃, cobalt content was 4 % by weight as CoO and phosphorus content was 3 % by weight as P₂O₅. The amount of 4-mercaptophenol used was 1.5 times of the theoretical amount of sulfur necessary to convert Mo and Co into MoS₂ and CoS, respectively.

The desulfurization percentage with the Catalyst-78 was 84.8 %.

### EXAMPLE 31:

Catalyst-79 was prepared in the same manner as Example 4, except that 108.9 g of 3-mercapto-1,2-propanediol was used as the sulfurizing agent.

The breaking strength of the Catalyst-79 was 1.5 kg/mm or more.

Regarding the active metal content in the Catalyst-79, molybdenum content was 15 % by weight as MoO₃, cobalt content was 4 % by weight as CoO and phosphorus content was 3 % by weight as P₂O₅. The amount of 3-mercapto-1,2-propanediol used was 1.5 times of the theoretical amount of sulfur necessary to convert Mo and Co into MoS₂ and CoS, respectively.

The desulfurization percentage with the Catalyst-79 was 85.0 %.

### EXAMPLE 32:

Catalyst-80 was prepared in the same manner as Example 8, except that 67.2 g of ethanedithiol was used as the sulfurizing agent.

The breaking strength of the Catalyst-80 was 1.5 kg/mm or more.

Regarding the active metal content in the Catalyst-80, molybdenum content was 20 % by weight as MoO₃, nickel content was 4 % by weight as NiO and phosphorus content was 6.5 % by weight as P₂O₅. The amount of ethanedithiol used was 1.5 times of the theoretical amount of sulfur necessary to convert Mo and Ni into MoS₂ and NiS, respectively.

The desulfurization percentage of the Catalyst-80 was 83.7 %.

### EXAMPLE 33:

Catalyst-81 was prepared in the same manner as Example 8, except that 111.6 g of 2-mercaptoethanol was used as the sulfurizing agent.

The breaking strength of the Catalyst-81 was 1.5 kg/mm or more.

Regarding the active metal content in the Catalyst-81, molybdenum content was 20 % by weight as MoO₃, nickel content was 4 % by weight as NiO and phosphorus content was 6.5 % by weight as P₂O₅. The amount of 2-mercaptoethanol used was 1.5 times of the-theoretical amount of sulfur necessary to convert Mo and Ni into MoS₂ and NiS, respectively.

The desulfurization percentage with the Catalyst-81 was 82.0 %.

### EXAMPLE 34:

Catalyst-82 was obtained in the same manner as Example 4, except that 126.9 g of 4-mercaptophenol was used as the sulfurizing agent.

The breaking strength of the Catalyst-82 was 1.5 kg/mm or more.

Regarding the active metal content in the Catalyst-82, molybdenum content was 15 % by weight as MoO₂, cobalt content was 4 % by weight as CoO and phosphorus content was 3 % by weight as P₂O₅. The amount of 4-mercaptophenol as used was 1.5 times of the theoretical amount of sulfur necessary to convert Mo and Co into MoS₂ and CoS, respectively.

The desulfurization percentage with the Catalyst-82 was 86.7 %.

### EXAMPLE 35:

Catalyst-83 was prepared in the same manner as Example 4, except taht 78.6 g of 2-mercaptoethanol was used as the sulfurizing agent.

The breaking strength of the catalyst-83 was 1.5 kg/mm or more.

Regarding the active metal content in the Catalyst-83, molybdenum content was 15 % by weight as MoO₃, cobalt content was 4 % by weight as CoO and phosphorus content was 3 % by weight ast P₂O₅. The amount of 2-mercaptoethanol used was 1.5 times of the theoretical amount of sulfur necessary to convert Mo and Co into MoS₂ and CoS, respectively.

The desulfurization percentage with the Catalyst-83 was 87.6 %.

### EXAMPLE 36:

Catalyst-84 was prepared in the same manner as Example 4, except that 47.3 g of ethanedithiol was used as the sulfurizing agent.

The breaking strength of the Catalyst-84 was 1.5 kg/mm or more.

Regarding the active metal content in the Catalyst-84, molybdenum content was 15 % by weight as MoO₃, cobalt content was 4 % by weight as CoO and phosphorus content was 3 % by weight as P₂O₅. The amount of ethanedithiol used was 1.5 times of the theoretical amount of sulfur necessary to convert Mo and Co into MoS₂ and CoS, resepctively.

The desulfurization percentage with the Catalyst-84 was 89.5 %.

### COMPARATIVE EXAMPLE 1:

A commercial catalyst comprising 15 wt.% of MoO₃ and 4 wt.% of CoO as carried on γ-alumina (KF-742, commercial product by Nippon Ketjen Co.) was prepared.

The catalyst was presulfurized in accordance with the following condition:
Sulfurizing Oil:
   3 wt.% n-butylmercaptan/Kuwait Straight-run light gas oil
Amount of Catalyst:
   3 ml
Raw Material Oil Liquid Hourly Space Velocity:
   2.0 hr⁻¹
Reaction Pressure (Hydrogen Pressure):
   30 kg/cm²
Reaction Temperature:
   316°C
Hydrogen/Oil Ratio:
   300 N liter/liter
Oil Passing Time:
   8hr

The activity of the thus presulfurized catalyst was evaluated in the same manner as in the above-mentioend examples. As a result, the desulfurization percentage was 82.4 %.

### COMPARATIVE EXAMPLE 2:

100 g of shaped γ-alumina carrier having a relative surface area of 280 m²/g and a pore volume of 0.75 ml/g was impregnated with 80 ml of a processing liquid prepared from 19.2 g of molybdenum trioxide, 8.2 g of cobalt carbonate having Co-cotent of 49.1 wt.%, 6.2 g of 85 wt.% phosphoric acid and water and dried at 110°C for 16 hours and thereafter fired at 500°C for 2 hours. Accordingly, a catalyst containing 15 % by weight of MoO₃, 4 % by weight of CoO and 3 % by weight of P₂O₅ was obtained.

The catalyst was presulfurized in the same manner as in the above-mentioned Comaprative Example 1 and the activity of the thus presulfurized catalyst was evaluated in the same manner as in the above-mentioned examples. As a result, the desulfurization percentage was 80.4 %.

It takes about 8 hours or so to presulfurize the conventional catalysts. In the case of the catalyst disclosed in the above-mentioned Japanese Patent Publication No. 61-111144 must be fired for at least 1 hour after it was impregnated with a sulfurizing agent. As opposed to them, the catalysts of the present invention require neither presulfurization nor firing and can directly be applied to hydrotreatment, as they are prepared by the use of an orgnaic compound having one or two sulfurs as a sulfurizing agent. Accordingly, the catalysts of the present invention are more economical than the conventional catalysts.

## Claims

1. A catalyst for hydrotreating hydrocarbons, which comprises a body formed by shaping a mixture composed of a carrier substance consisting of an oxide of aluminium and/or oxide hydrate of aluminium, at least one water-soluble compound of a metal of Group VI and/or Group VIII of the Periodic Table, phosphoric acid and at least one organic compound selected from the group consisting of mercapto-carboxylic acids of general formula:
HS-(CH₂)ₙ-COOR
where n is 1 to 3; and R represents a hydrogen atom, or an alkali metal, an alkaline earth metal, an ammonium group, or C₁₋₁₀ alkyl group;
thio-acids of a general formula:
R'-COSH
where R' represents a monovalent C₁₋₁₅ hydrocarbon group; amino-substituted mercaptans of a general formula:
H₂N-R"-SH
where R" represents a divalent C₁₋₁₅ hydrocarbon group; dimercaptans of a general formula:
HS-R"-HS
where R" represents a divalent C₁₋₁₅ hydrocarbon group; and mercapto-alcohol-s of a general formula;
RaS-R'''-(OH)ₙ
where R''' represents a C₁₋₁₅ alkyl group, or a phenyl group; Ra represents a hydrogen atom or C₁₋₂ alkyl group; and n is 1 or 2.

2. The catalyst for hydrotreating hydrocarbons as claimed in claim 1, in which the oxide of aluminium and/or oxide hydrate of aluminium for constituting the carrier substance is at least one of gamma-alumina, dehydrated boehmite and spray-dried boehmite.

3. The catalyst for hydrotreating hydrocarbons as claimed in claim 1, in which the water-soluble compounds of metals of Group VI of the Periodic Table are at least one of ammonium molybdate and ammonium tungstate, and ammonium molybdate and ammonium tungstate as prepared by treating molybdenum trioxide and tungsten trioxide, respectively, with ammonia gas; and the water-soluble compounds of metals of Group VIII of the Periodic Table are at least one of cobalt nitrate, cobalt carbonate, nickel nitrate and nickel carbonate; the mixture containing at least one selected from the said water-soluble compounds.

4. The catalyst for hydrotreating hydrocarbons as claimed in claim 1, in which the mercapto-carboxylic acids is at least one of mercapto-acetic acid and β-mercapto-propionic acid and alkali metal salts, alkaline earth metal salts and ammonium salts thereof and methyl mercapto-acetate, ethyl 2-mercapto-acetate, 2-ethylhexyl mercapto-acetate and methyl 3-mercaptopropionate.

5. The catalyst for hydrotreating hydrocarbons as claimed in claim 1, in which the thio-acid is thio-acetic acid and/or thio-benzoic acid.

6. The catalyst for hydrotreating hydrocarbons as claimed in claim 1, in which the amino-substituted mercaptan is 2-aminoethanethiol and/or 4-aminothiophenol.

7. The catalyst for hydrotreating hydrocarbons as claimed in claim 1, in which the dimercaptan is ethanedithiol and/or 1,4-butanedithiol.

8. The catalyst for hydrotreating hydrocarbons as claimed in claim 1, in which the mercapto-alcohol is at least one of 2-mercaptoethanol, 2-(methylthio)ethanol, 2-(ethylthio)ethanol, 3-mercapto-2-butanol, 4-mercaptophenol, 2-(methylthio)phenol, 4-(methylthio)phenol, 2-(ethylthio)phenol, 3-mercapto-1,2-propanediol, 3-methylthio-1,2-propanediol and 3-ethylthio-1,2-propanediol.

9. The catalyst for hydrotreating hydrocarbons as claimed in claim 1, in which the content of the metals of Groups VI and VIII of the Periodic Table is from 1 to 30% by weight as the metal oxide, when the catalyst contains one metal of them, or the content of the metal of Group VI is from 5 to 30% by weight as the metal oxide and that of the metal of Group VIII is from 1 to 8% by weight as the metal oxide when the catalyst contains both metals of Group VI and VIII.

10. A method for preparing a catalyst for hydrotreating hydrocarbons, characterised in that a carrier substance consisting of an oxide of aluminium and/or an oxide hydrate of aluminium is blended and kneaded with a solution containing at least one water-soluble compound of a metal of Group VI and/or Group VIII of the Periodic Table, phosphoric acid and at least one organic compound selected from mercapto-carboxylic acids of a general formula:
HS-(CH₂)_{N}-COOR
where n is 1 to 3; and R represents a hydrogen atom, or an alkali metal, an alkaline earth metal, an ammonium group, or C₁₋₁₀ alkyl group,
thio-acids of a general formula:
R'-COSH
where R' represents a monovalent C₁₋₁₅ hydrocarbon group, amino-substituted mercaptans of a general formula:
H₂N-R"-SH
where R" represents a divalent C₁₋₁₅ hydrocarbon group, dimercaptans of a general formula:
HS-R"-SH
where R" represents a C₁₋₁₅ divalent hydrocarbon group, and mercapto-alcohols of a general formula:
RaS-R'''-(OH)ₙ
where R"' represents a C₁₋₁₅ alkyl group or a phenyl group; Ra represents a hydrogen atom or C₁₋₂ alkyl group; and n is 1 or 2, and the resulting blend is shaped and dried to prepare the said catalyst.

11. The method for preparing a catalyst for hydrotreating hydrocarbons as claimed in claim 10, in which the oxide of aluminium and/or oxide hydrate of aluminium for constituting the carrier substance is(are) at least one of gamma-alumina, dehydrated boehmite and spray-dried boehmite.

12. The method for preparing a catalyst for hydrotreating hydrocarbons as claimed in claim 10, in which the water-soluble compounds of metals of Group VI of the Periodic Table are at least one of ammonium molybdate and ammonium tungstate, and ammonium molybdate and ammonium tungstate as prepared by treating molybdenum trioxide and tungsten trioxide, respectively, with ammonia gas; and the water-soluble compounds of metals of Group VIII of the Periodic Table are at least one of cobalt nitrate, cobalt carbonate, nickel nitrate and nickel carbonate; the aqueous solution containing at least one of the said water-soluble compounds.

13. The method for preparing a catalyst for hydrotreating hydrocarbons as claimed in claim 10, in which the mercapto-carboxylic acids is at least one of mercapto-acetic acid and β-mercapto-propionic acid and alkali metal salts, alkaline earth metal salts and ammonium salts thereof and methyl mercapto-acetate, ethyl 2-mercapto-acetate, 2-ethylhexyl mercapto-acetate and methyl 3-mercapto-propionate.

14. The method for preparing a catalyst for hydrotreating hydrocarbons as claimed in claim 10, in which the thio-acids is thio-acetic acid and/or thio-benzoic acid.

15. The method for preparing a catalyst for hydrotreating hydrocarbons as claimed in claim 10, in which the amino-substituted mercaptan is 2-aminoethanethiol and/or 4-aminothiophenol.

16. The method for preparing a catalyst for hydrotreating hydrocarbons as claimed in claim 10, in which the dimercaptan is ethanedithiol and/or 1,4-butandedithiol.

17. The method for preparing a catalyst for hydrotreating hydrocarbons as claimed in claim 10, in which the mercapto-alcohol is at least one of 2-mercaptoethanol, 2-(methylthio)ethaol, 2-(ethylthio)ethanol, 3-mercapto-2-butanol, 4-mercaptophenol, 2-(methylthio)phenol, 4-(methylthio)phenol, 3-mercapto-1,2-propanediol, 3-methylthio-1,2-propanediol and 3-ethylthio-1,2-propanediol.

18. The method for preparing a catalyst for hydrotreating hydrocarbons as claimed in claim 10, in which the content of the metals of Groups VI and VIII of the Periodic Table in the catalyst is from 1 to 30% by weight as the metal oxide, when the catalyst contains one metal of them, or the content of the metal of Group VI in the catalyst is from 5 to 30% by weight as the metal oxide and that of the metal of Group VIII therein is from 1 to 8 by weight as the metal oxide when the catalyst contains both the metals of Groups VI and VIII.

19. The method of preparing a catalyst for hydrotreating hydrocarbons as claimed in claim 10, in which the amount of the mercapto-carboxylic acids and other sulphurizing agents is from 1 to 3 equivalent times of the amount of the sulphur necessary for forming sulphides of the metals of Groups VI and VIII of the Periodic Table, the said sulphides being high active in hydrogenation reaction.

20. The method for preparing a catalyst for hydrotreating hydrocarbons as claimed in claim 10, in which the amount of the phosphoric acid is about 3% by weight or so as P₂O₅.

21. The method for preparing a catalyst for hydrotreating hydrocarbons as claimed in claim 10, in which the drying temperature is from 50 to 200°C and the drying time is from 2 to 20 hours.

## Patentansprüche

1. Katalysator zur Hydrobehandlung von Kohlenwasserstoffen, welcher einen Formkörper umfaßt, der durch Formen eines Gemisches hergestellt wird, das aus einer Trägersubstanz bestehend aus einem Aluminiumoxid und/oder einem Aluminiumoxidhydrat, mindestens einer wasserlöslichen Verbindung eines Metalls der Gruppe VI und/oder der Gruppe VIII des Periodensystems, Phosphorsäure und mindestens einer organischen Verbindung, ausgewählt aus der Gruppe, die aus Mercaptocarbonsäuren der allgemeinen Formel:
HS-(CH₂)ₙ-COOR
worin n 1 bis 3 ist; R ein Wasserstoffatom oder ein Alkalimetall, ein Erdalkalimetall, eine Ammoniumgruppe oder eine C₁₋₁₀-Alkylgruppe ist; Thiosäuren der allgemeinen Formel:
R'-COSH
worin R' eine einwertige C₁₋₁₅-Kohlenwasserstoffgruppe ist; aminosubstituierte Mercaptane der allgemeinen Formel:
H₂N-R"-SH
worin R" eine zweiwertige C₁₋₁₅-Kohlenwasserstoffgruppe ist; Dimercaptane der allgemeinen Formel:
HS-R"-SH
worin R" eine zweiwertige C₁₋₁₅-Kohlenwasserstoffgruppe ist; und Mercaptoalkohole der allgemeinen Formel:
RaS-R'''-(OH)ₙ
worin R" ' eine C₁₋₁₅-Alkylgruppe oder eine Phenylgruppe ist; Ra ein Wasserstoffatom oder eine C₁₋₂-Alkylgruppe ist, und n 1 oder 2 ist, zusammengesetzt ist.

2. Katalysator zur Hydrobehandlung von Kohlenwasserstoffen nach Anspruch 1, in dem das Aluminiumoxid und/oder das Aluminiumoxidhydrat zur Herstellung der Trägersubstanz mindestens eine Verbindung aus der Gruppe ist, die aus einem γ-Aluminiumoxid, einem entwässertem Boehmit oder einem im Sprühverfahren getrockneten Boehmit besteht.

3. Katalysator zur Hydrobehandlung von Kohlenwasserstoffen nach Anspruch 1, in welchem die wasserlöslichen Metallverbindungen der Gruppe VI des Periodensystems mindestens eine Verbindung aus der Gruppe sind, die aus Ammoniummolybdat und Ammoniumwolframat sowie aus Ammoniummolybdat und Ammoniumwolframat, die durch Behandlung von Molybdäntrioxid bzw. Wolframtrioxid mit Ammoniakgas hergestellt werden, besteht; und die wasserlöslichen Verbindungen von Metallen der Gruppe VIII des Periodensystems mindestens eine Verbindung der Gruppe ist, die aus Cobaltnitrat, Cobaltcarbonat, Nickelnitrat und Nickelcarbonat besteht; und das Gemisch mindestens eine Verbindung enthält, die aus diesen wasserlöslichen Verbindungen ausgewählt ist.

4. Katalysator zur Hydrobehandlung von Kohlenwasserstoffen nach Anspruch 1, in dem die Mercaptocarbonsäuren mindestens eine Verbindung aus der Gruppe sind, die aus Mercapto-Essigsäure und β-Mercaptopropionsäure und deren Alkalimetallsalzen, Erdalkalimetallsalzen und Ammoniumsalzen und Methylmercaptoacetat, Ethyl-2-mercaptoacetat, 2-Ethylhexylmercaptoacetat und Methyl-3-mercaptopropionat besteht.

5. Katalysator zur Hydrobehandlung von Kohlenwasserstoffen nach Anspruch 1, in dem die Thiosäure Thioessigsäure und/oder Thiobenzoesäure ist.

6. Katalysator zur Hydrobehandlung von Kohlenwasserstoffen nach Anspruch 1, in dem das aminosubstituierte Mercaptan 2-Aminoethanthiol und/oder 4-Aminothiophenol ist.

7. Katalysator zur Hydrobehandlung von Kohlenwasserstoffen nach Anspruch 1, in dem das Dimercaptan Ethandithiol und/oder 1,4-Butandithiol ist.

8. Katalysator zur Hydrobehandlung von Kohlenwasserstoffen nach Anspruch 1, in dem der Mercaptoalkohol mindestens eine Verbindung aus der Gruppe ist, die aus 2-Mercaptoethanol, 2-(Methylthio)ethanol, 2-(Ethylthio)ethanol, 3-Mercapto-2-butanol, 4-Mercaptophenol, 2-(Methylthio)phenol, 4-(Methylthio)phenol, 2-(Ethylthio)phenol, 3-Mercapto-1,2-propandiol, 3-Methylthio-1,2-propandiol und 3-Ethylthio-1,2-propandiol besteht.

9. Katalysator zur Behandlung von Kohlenwasserstoffen nach Anspruch 1, in dem der Gehalt an Metallen der Gruppe VI und VIII des Periodensystems 1 bis 30 Gew.-%, berechnet als Metalloxid, beträgt, wenn der Katalysator eines dieser Metalle enthält, oder der Gehalt an Metall der Gruppe VI 5 bis 30 Gew.-%, berechnet als Metalloxid, beträgt, und der Gehalt des Metalls der Gruppe VIII 1 bis 8 Gew.-%, berechnet als Metalloxid, beträgt, wenn der Katalysator sowohl Metalle der Gruppe VI als auch der Gruppe VIII enthält.

10. Verfahren zur Herstellung eines Katalysators zur Hydrobehandlung von Kohlenwasserstoffen, dadurch gekennzeichnet, daß eine Trägersubstanz, bestehend aus einem Aluminiumoxid und/oder einem Aluminiumoxidhydrat mit einer Lösung vermischt und verknetet wird, die mindestens eine wasserlösliche Verbindung eines Metalls der Gruppe VI und/oder der Gruppe VIII des Periodensystems, Phosphorsäure und mindestens eine organische Verbindung, ausgewählt aus Mercaptocarbonsäuren der allgemeinen Formel:
HS-(CH₂)ₙ-COOR
worin n 1 bis 3 ist; R ein Wasserstoffatom oder ein Alkalimetall, ein Erdalkalimetall, eine Ammoniumgruppe oder eine C₁₋₁₀-Alkylgruppe ist, Thiosäuren der allgemeinen Formel:
R'-COSH
worin R' eine einwertige C₁₋₁₅-Kohlenwasserstoffgruppe ist, Aminosubstituierten Mercaptanen der allgemeinen Formel:
H₂N-R"-SH
worin R" eine zweiwertige C₁₋₁₅-Kohlenwasserstoffgruppe ist, Dimercaptanen der allgemeinen Formel:
HS-R"-SH
worin R" eine zweiwertige C₁₋₁₅-Kohlenwasserstoffgruppe ist, und Mercaptoalkoholen der allgemeinen Formel:
RaS-R'''-(OH)ₙ
worin R''' eine C₁₋₁₅-Alkylgruppe oder eine Phenylgruppe ist, Ra ein Wasserstoffatom oder eine C₁₋₂-Alkylgruppe ist; und n 1 oder 2 ist, enthält, und die erhaltende Mischung geformt und getrocknet wird, um den Katalysator herzustellen.

11. Verfahren zur Herstellung eines Katalysators zur Hydrobehandlung von Kohlenwasserstoffen nach Anspruch 10, in dem das Aluminumoxid und/oder das Aluminiumoxidhydrat zur Herstellung der Trägersubstanz mindestens eine Verbindung aus der Gruppe ist, die aus γ-Aluminiumoxid, entwässertem Boehmit und im Sprühverfahren getrocknetem Boehmit besteht.

12. Verfahren zur Herstellung eines Katalysators zur Hydrobehandlung von Kohlenwasserstoffen nach Anspruch 10, in dem die wasserlöslichen Metallverbindungen der Gruppe VI des Periodensystems mindestens eine Verbindung aus der Gruppe sind, die aus Ammoniummolybdat und Ammoniumwolframat sowie Ammoniummolybdat und Ammoniumwolframat, die durch Behandlung von Molybdäntrioxid bzw. Wolframtrioxid mit Ammoniakgas hergestellt werden, besteht; und die wasserlöslichen Verbindungen von Metallen der Gruppe VIII des Periodensystems mindestens eine Verbindung aus der Gruppe sind, die aus Cobaltnitrat, Cobaltcarbonat, Nickelnitrat und Nickelcarbonat besteht; und die wäßrige Lösung mindestens eine dieser wasserlöslichen Verbindungen enthält.

13. Verfahren zur Herstellung eines Katalysators zur Hydrobehandlung von Kohlenwasserstoffen nach Anspruch 10, in dem die Mercaptocarbonsäuren mindestens eine Verbindung aus der Gruppe sind, die aus Mercaptoessigsäure und β-Mercaptopropionsäure und deren Alkalimetallsalzen, Erdalkalimetallsalzen und Ammoniumsalzen und Methylmercaptoacetat, Ethyl-2-mercaptoacetat, 2-Ethylhexylmercaptoacetat und Methyl-3-mercaptopropionat besteht.

14. Verfahren zur Herstellung eines Katalysators zur Hydrobehandlung von Kohlenwasserstoffen nach Anspruch 10, bei dem die Thiosäuren eine Thioessigsäure und/oder Thiobenzoesäure sind.

15. Verfahren zur Herstellung eines Katalysators zur Hydrobehandlung von Kohlenwasserstoffen nach Anspruch 10, in dem das aminosubstituierte Mercaptan 2-Aminoethanthiol und/oder 4-Aminothiophenol ist.

16. Verfahren zur Herstellung eines Katalysators zur Hydrobehandlung von Kohlenwasserstoffen nach Anspruch 10, in dem das Dimercaptan Ethandithiol und/oder 1,4-Butandithiol ist.

17. Verfahren zur Herstellung eines Katalysators zur Hydrobehandlung von Kohlenwasserstoffen nach Anspruch 10, in dem der Mercaptoalkohol mindestens eine Verbindung aus der Gruppe ist, die aus 2-Mercaptoethanol, 2-(Methylthio)ethanol, 2-(Ethylthio)ethanol, 3-Mercapto-2-butanol, 4-Mercaptophenol, 2-(Methylthio)phenol, 4-(Methylthio)phenol, 3-Mercapto-1,2-propandiol, 3-Methylthio-1,2-propandiol und 3-Ethylthio-1,2-propandiol besteht.

18. Verfahren zur Herstellung eines Katalysators zur Hydrobehandlung von Kohlenwasserstoffen nach Anspruch 10, in dem der Gehalt an Metallen der Gruppe VI und VIII des Periodensystems in dem Katalysator 1 bis 30 Gew.-%, berechnet als Metalloxid beträgt, wenn der Katalysator eines dieser Metalle enthält, oder der Gehalt des Metalls der Gruppe VI in dem Katalysator 5 bis 30 Gew.-%, berechnet als Metalloxid, beträgt, und der Gehalt des Metalls der Gruppe VIII 1 bis 8 Gew.-%, berechnet als Metalloxid, in beträgt, wenn der Katalysator sowohl Metalle der Gruppe VI als auch VIII enthält.

19. Verfahren zur Herstellung eines Katalysators zur Hydrobehandlung von Kohlenwasserstoffen nach Anspruch 10, in dem die Menge an Mercaptocarbonsäuren und anderen Schwefelungsmitteln 1 bis 3 Äquivalente der Menge an Schwefel beträgt, die erforderlich ist, um Sulfide von Metallen der Gruppe VI und VIII des Periodensystems zu bilden, wobei die Sulfide in der Hydrierungsreaktion hochaktiv sind.

20. Verfahren zur Herstellung eines Katalysators zur Hydrobehandlung von Kohlenwasserstoffen nach Anspruch 10, in dem die Menge an Phosphorsäure ungefähr im Bereich von 3 Gew.-%, berechnet als P₂O₅ liegt.

21. Verfahren zur Herstellung eines Katalysators zur Hydrobehandlung von Kohlenwasserstoffen nach Anspruch 10, in dem die Trocknungstemperatur 50 bis 200°C und die Trocknungszeit 2 bis 20 Stunden beträgt.

## Revendications

1. Catalyseur pour l'hydrotraitement d'hydrocarbures, comprenant un corps obtenu par conformation d'un mélange se présentant sous la forme d'un substrat d'un oxyde d'aluminium et/ou d'un hydroxyde d'aluminium, d'au moins un composé hydrosoluble choisi parmi les métaux du groupe VI et/ou du groupe VIII de la classification périodique, d'acide phosphorique et d'au moins un composé organique choisi dans le groupe constitué par :
. les acides mercapto-carboxyliques de formule générale
HS-(CH₂)ₙ-COOR
où n est compris entre 1 et 3, et R représente un atome d'hydrogène ou un métal alcalin, un métal alcalino-terreux, un groupe ammonium ou un groupe alkyle C₁₋₁₀ ;
. les thio-acides de formule générale
R'-COSH
où R' représente un groupe hydrocarboné C₁₋₁₅ monovalent ;
. les mercaptans amino-substitués de formule générale
H₂N-R"-SH
où R" représente un groupe hydrocarboné C₁₋₁₅ divalent ;
. les dimercaptans de formule générale
HS-R"-HS
où R" représente un groupe hydrocarboné C₁₋₁₅ divalent ;
. et par les mercapto-alcools de formule générale
RaS-R'''-(OH)ₙ
où R"' représente un groupe alkyle C₁₋₁₅ ou un groupe phényle, Ra représente un atome d'hydrogène ou un groupe alkyle C₁₋₂, et n est égal à 1 ou 2.

2. Catalyseur pour l'hydrotraitement d'hydrocarbures selon la revendication 1, dans lequel l'oxyde d'aluminium et/ou l'hydroxyde d'aluminium utilisé pour former le substrat est l'un au moins des éléments du groupe constitué par l'oxyde d'aluminium gamma, la boehmite déshydratée et la boehmite séchée par pulvérisation.

3. Catalyseur pour l'hydrotraitement d'hydrocarbures selon la revendication 1, dans lequel les composés hydrosolubles des métaux du groupe VI de la classification périodique consistent en l'un au moins des éléments de l'ensemble constitué par le molybdate d'ammonium et le tungstate d'ammonium, le molybdate d'ammonium et le tungstate d'ammonium tels que obtenus par traitement respectivement d'anhydre molybdique et d'acide tungstique avec du gaz ammoniac, et en ce que les composés hydrosolubles des métaux du groupe VIII de la classification périodique sont choisis parmi l'un au moins des éléments de l'ensemble constitué par le nitrate de cobalt, le carbonate de cobalt, le nitrate de nickel et le carbonate de nickel, le mélange renfermant l'un au moins de ces composés hydrosolubles.

4. Catalyseur pour l'hydrotraitement d'hydrocarbures selon la revendication 1, dans lequel les acides mercapto-carboxyliques consistent en l'un au moins des éléments du groupe constitué par l'acide mercapto-acétique, l'acide β-mercapto-propionique et les sels de métaux alcalins, les sels de métaux alcalino-terreux et leurs sels d'ammonium, le mercapto-acétate de méthyle, le 2-mercapto-acétate d'éthyle, le mercapto-actétate de 2-éthylhexyle et le 3-mercaptopropionate de méthyle.

5. Catalyseur pour l'hydrotraitement d'hydrocarbures selon la revendication 1, dans lequel le thio-acide est l'acide thio-acétique et/ou l'acide thio-benzoïque.

6. Catalyseur pour l'hydrotraitement d'hydrocarbures selon la revendication 1, dans lequel le mercaptan amino-substitué est le 2-aminoéthanethiol et/ou le 4-aminnothiophénol.

7. Catalyseur pour l'hydrotraitement d'hydrocarbures selon la revendication 1, dans lequel le dimercaptan est l'éthanedithiol et/ou le 1,4-butanedithiol.

8. Catalyseur pour l'hydrotraitement d'hydrocarbures selon la revendication 1, dans lequel le mercapto-alcool est l'un au moins des éléments du groupe formé par le 2-mercaptoéthanol, le 2-(méthylethio)éthanol, le 2-(éthylethio)éthanol, le 3-mercapto-2-butanol, le 4-mercaptophénol, le 2-(méthylethio)phénol, le 4-(méthylethio)phénol, le 2-(éthylethio)phénol, le 3-mercapto-1,2-propanediol, le 3-méthylethio-1,2-propanediol et le 3-éthylethio-1,2-propanediol.

9. Catalyseur pour l'hydrotraitement d'hydrocarbures selon la revendication 1, dans lequel la concentration en métaux des groupes VI et VIII de la classification périodique est comprise entre 1 et 30 % en poids de leur forme oxyde lorsque le catalyseur renferme un métal de l'un de ces groupes, ou dans lequel la concentration en métal du groupe VI est comprise entre 5 et 30 % en poids de sa forme oxyde, et celle du métal du groupe VIII est comprise entre 1 et 8 % en poids de sa forme oxyde lorsque le catalyseur contient à la fois des métaux des groupes VI et VIII.

10. Procédé de préparation d'un catalyseur pour l'hydrotraitement d'hydrocarbures, caractérisé en ce qu'un substrat formé d'un oxyde d'aluminium et/ou d'un hydroxyde d'aluminium est mélangé et malaxé avec une solution contenant au moins un composé hydrosoluble d'un métal du groupe VI et/ou du groupe VIII de la classification périodique, de l'acide phosphorique et au moins un composé organique choisi dans le groupe constitué par :
. les acides mercapto-carboxyliques de formule générale
HS-(CH₂)ₙ-COOR
où n est compris entre 1 et 3, et R représente un atome d'hydrogène, ou un métal alcalin, un métal alcalino-terreux, un groupe ammonium ou un groupe alkyle C₁₋₁₀ ;
. les thioacides de formule générale
R'-COSH
où R' représente un groupe hydrocarboné *C*_{*1-15*} monovalent ;
. les mercaptans amino-substitués de formule générale
H₂N-R"SH
où R" représente un groupe hydrocarboné C₁₋₁₅ divalent ;
. les dimercaptans de formule générale
HS-R"-HS
où R" représente un groupe hydrocarboné C₁₋₁₅ divalent ;
. et par les mercapto-alcools de formule générale
RaS-R'''- (OH)ₙ
où R"' représente un groupe alkyle C₁₋₁₅ ou un groupe phényle, Ra représente un atome d'hydrogène ou un groupe alkyle C₁₋₂, et n est égal à 1 ou 2,
le mélange résultant étant conformé et séché pour la préparation dudit catalyseur.

11. Procédé de préparation d'un catalyseur pour l'hydrotraitement d'hydrocarbures selon la revendication 10, dans lequel l'oxyde d'aluminium et/ou l'hydroxyde d'aluminium utilisé pour former le substrat est (sont) l'un au moins des éléments du groupe constitué par l'oxyde d'aluminium gamma, la boehmite déshydratée et la boehmite séchée par pulvérisation.

12. Procédé de préparation d'un catalyseur pour l'hydrotraitement d'hydrocarbures selon la revendication 10, dans lequel les composés hydrosolubles des métaux du groupe VI de la classification périodique consistent en l'un au moins des éléments de l'ensemble formé par le molybdate d'ammonium et le tungstate d'ammonium, le molybdate d'ammonium et le tungstate d'ammonium tels que obtenus par traitement respectivement d'anhydre molybdique et d'acide tungstique avec du gaz ammoniac, et en ce que les composés hydrosolubles des métaux du groupe VIII de la classification périodique sont choisis parmi l'un au moins des éléments de l'ensemble constitué par le nitrate de cobalt, le carbonate de cobalt, le nitrate de nickel et le carbonate de nickel, le mélange renfermant l'un au moins de ces composés hydrosolubles.

13. Procédé de préparation d'un catalyseur pour l'hydrotraitement d'hydrocarbures selon la revendication 10, dans lequel les acides mercapto-carboxyliques consistent en l'un au moins des éléments du groupe constitué par l'acide mercapto-acétique, l'acide β-mercapto-propionique et les sels de métaux alcalins, les sels de métaux alcalino-terreux et leurs sels d'ammonium, le mercapto-acétate de méthyle, le 2-mercapto-acétate d'éthyle, le mercapto-actétate de 2-éthylhexyle et le 3-mercapto-propionate de méthyle.

14. Procédé de préparation d'un catalyseur pour l'hydrotraitement d'hydrocarbures selon la revendication 10, dans lequel le thioacide est l'acide thio-acétique et/ou l'acide thio-benzoïque.

15. Procédé de préparation d'un catalyseur pour l'hydrotraitement d'hydrocarbures selon la revendication 10, dans lequel le mercaptan amino-substitué est le 2-aminoéthanethiol et/ou le 4-aminnothiophénol.

16. Procédé de préparation d'un catalyseur pour l'hydrotraitement d'hydrocarbures selon la revendication 10, dans lequel le dimercaptan est l'éthanedithiol et/ou le 1,4-butanedithiol.

17. Procédé de préparation d'un catalyseur pour l'hydrotraitement d'hydrocarbures selon la revendication 10, dans lequel le mercapto-alcool est l'un au moins des éléments du groupe formé par le 2-mercaptoéthanol, le 2-(méthylethio)éthanol, le 2-(éthylethio)éthanol, le 3-mercapto-2-butanol, le 4-mercaptophénol, le 2-(méthylethio)phénol, le 4-(méthylethio)phénol, le 2-(éthylethio)phénol, le 3-mercapto-1,2-propanediol, le 3-méthylethio-1,2-propanediol et le 3-éthylethio-1,2-propanediol.

18. Procédé de préparation d'un catalyseur pour l'hydrotraitement d'hydrocarbures selon la revendication 10, dans lequel la concentration en métaux des groupes VI et VIII de la classification périodique est comprise entre 1 et 30 % en poids de leur forme oxyde lorsque le catalyseur renferme un métal de l'un de ces groupes, ou dans lequel la concentration en métal du groupe VI est comprise entre 5 et 30 % en poids de sa forme oxyde, et celle du métal du groupe VIII est comprise entre 1 et 8 % en poids de sa forme oxyde lorsque le catalyseur contient à la fois des métaux des groupes VI et VIII.

19. Procédé de préparation d'un catalyseur pour l'hydrotraitement d'hydrocarbures selon la revendication 10, dans lequel la quantité d'acides mercapto-carboxyliques et autres agents de sulfurisation est comprise entre 1 et 3 fois la quantité équivalente de soufre nécessaire à la formation des sulfures des métaux des groupes VI et VIII de la classification périodique, lesdits sulfures étant très actifs dans la réaction d'hydrogénation.

20. Procédé de préparation d'un catalyseur pour l'hydrotraitement d'hydrocarbures selon la revendication 10, dans lequel la quantité d'acide phosphorique est d'environ 3 % en poids ou équivalent de P₂O₅.

21. Procédé de préparation d'un catalyseur pour l'hydrotraitement d'hydrocarbures selon la revendication 10, dans lequel la température de séchage est comprise entre 50 et 200°C et le temps de séchage est compris entre 2 et 20 heures.
